# EUROPÄISCHE PATENTSCHRIFT

(11) **EP 3 627 370 B1**
(45) Veröffentlichungstag und Bekanntmachung des Hinweises auf die Patenterteilung: **12.08.2020**
(21) Anmeldenummer: 19193944.6
(22) Anmeldetag: 27.08.2019
(51) Int. Cl.: G06F 21/62

(54) **VERFAHREN UND SYSTEM ZUM VERARBEITEN VON PERSONENBEZOGENEN OPTISCHEN UND/ODER AKUSTISCHEN SIGNALEN**
METHOD AND SYSTEM FOR PROCESSING PERSON-RELATED OPTICAL AND / OR ACOUSTIC SIGNALS
PROCÉDÉ ET SYSTÈME DE TRAITEMENT DES SIGNAUX OPTIQUES ET / OU ACOUSTIQUES PERSONNELS

(30) Priorität: 07.09.2018 DE 102018121881
(43) Veröffentlichungstag der Anmeldung: 25.03.2020
(73) Patentinhaber: EnBW Energie Baden-Württemberg AG, 76131 Karlsruhe (DE)
(72) Erfinder: Sieck, Michael, 76829 Landau (DE); Weber, Matthias, 76275 Ettlingen (DE)
(74) Vertreter: RPK Patentanwälte Reinhardt, Pohlmann und Kaufmann Partnerschaft mbB

(56) Entgegenhaltungen:
- WO-A1-2017/083932
- US-A1- 2013 108 105
- A Cavallaro: "ADDING PRIVACY CONSTRAINTS TO VIDEO-BASED APPLICATIONS", Proceedings of the European Workshop for the Integration of Knowledge, Semantics and Digital Media Technology (EWIMT, 25. November 2004 (2004-11-25), Seiten 1-8, XP055382434, Gefunden im Internet: URL:https://pdfs.semanticscholar.org/84d5/ f0659a544eee0d2ccdf8c3d6ccbd68bfad51.pdf [gefunden am 2017-06-19]

## Beschreibung

### Stand der Technik

Die Erfindung betrifft ein Verfahren zum Verarbeiten von personenbezogenen optischen und/oder akustischen Signalen und ein System zur Durchführung des Verfahrens.

Die Videoüberwachung im öffentlichen Raum, insbesondere an Bahnhöfen und sozialen Brennpunkten nimmt seit Jahren zu. Längst sind vielerorts Videoüberwachungssysteme installiert, die der Prävention von Straftaten oder der Strafverfolgung dienen. Zu nennen sind hier Kameras im öffentlichen Nahverkehr, aber auch mobile Body-Cams bei Mitarbeitern des öffentlichen Nahverkehrs oder der Polizei.

Bisher besitzen derartige Systeme eine hohe Fehlerquote, die sich unter anderem aus häufig schlechten Lichtverhältnissen, optischen Ungenauigkeiten oder sonstigen technischen Fehlern ergibt.

In bisherigen Systemen werden sogenannte "Klarbilder" verarbeitet, die heute aus Datenschutzgründen nur noch sehr eingeschränkt verwendet werden dürfen und auf die letztlich nur die Polizei oder Justizbehörden bei Vorliegen einer Straftat Zugriff haben. Der Einsatz ist z.B. für eine Stadt oder Gemeinde zur Überwachung eines Marktplatzes als Präventivmaßnahme nicht ohne weiteres möglich.

Die Beobachtung öffentlich zugänglicher Räume mit Videoüberwachung ist grundsätzlich nur zulässig, wenn sie zur Aufgabenerfüllung von öffentlichrechtlichen Stellen innerhalb des gesetzlichen Rahmens vorgenommen wird. In Ausnahmefällen kann sie jedoch auch von privater Seite zur Wahrnehmung des Hausrechts oder zur Wahrnehmung anderer berechtigter Interessen für konkret festgelegte Zwecke zulässig vorgenommen werden. In jedem Fall ist eine ausführliche Interessenabwägung zwischen dem Eingriff in das Persönlichkeitsrecht der Betroffenen und dem berechtigten Interesse an einer Überwachung, z. B. durch den Staat, zum Schutz der öffentlichen Sicherheit und Ordnung vorzunehmen.

Aus der US 2011/0320389 A1 ist ein Sicherheits- und Produktivitätsüberwachungssystem bekannt, bei dem eine oder mehrere Kameras Videodaten aufzeichnen, welche Attribute aufweisen. Die Attribute kennzeichnen eine Priorität der Kamera. Eine oder mehrere Video-Analyseeinheiten verarbeiten die Videodaten der Kameras und detektieren einfache Videosequenzen in den Videodaten. Eine Korrelationseinheit korreliert zwei oder mehrere einfache Videosequenzen aus den Video-Analyseeinheiten, gewichtet mit den Attributen der Kameras, von denen die Videodaten aufgenommen wurden. Eine Alarmeinheit generiert einen oder mehrere Alarme und führt ein oder mehrere Aktionen aus, basierend auf der Korrelation, die durch die Korrelationseinheit vorgenommen wurde.

Die US 2018/0181868 A1 offenbart weiter ein Computersystem für Cloudbasiertes Verarbeiten von Wahrnehmungsdaten. Das Computersystem umfasst einen Sensor, um Wahrnehmungsdaten zu sammeln. Das Computersystem umfasst weiter eine Einheit für analytische Entscheidungen, um einen Verfügbarkeitswert basierend auf den Sensordaten zu gewinnen und daraus einen Vertrauenslevel des Verfügbarkeitswerts abzuleiten. Das Computersystem vergleicht den Vertrauenslevel mit einem Grenzwert und sendet die Daten an ein Cloud-Computersystem, wenn der Vertrauenslevel unter dem Grenzwert liegt. Aus der WO 2017/083932 ist ein Verfahren zum Video Monitoring bekannt, dass die Privatsphäre schützt und Metadaten verwendet.

### Offenbarung der Erfindung

Die Aufgabe der Erfindung ist, ein Verfahren für eine datenschutzkonforme Überwachung mit optischen und/oder akustischen Signalen anzugeben. Eine weitere Aufgabe besteht darin, ein System zum Durchführen eines solchen Verfahrens anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Es wird ein Verfahren zum Verarbeiten von personenbezogenen optischen und/oder akustischen Signalen vorgeschlagen, gekennzeichnet durch die Schritte (i) Erfassen von optischen Signalen, insbesondere von Bildsignalen und/oder Videosignalen, mit wenigstens einer ersten Erfassungseinheit zur Erfassung optischer Signale; (ii) Weiterleiten der optischen Signale in einem ersten Signalstrom an eine erste Verarbeitungseinheit; (iii) Anonymisieren von personenbezogenen optischen Signalen im ersten Signalstrom in der ersten Verarbeitungseinheit; (iv) Ausgeben eines anonymisierten Ausgangssignalstroms, der die anonymisierten personenbezogenen optischen Signale enthält, an eine erste Datenverarbeitungseinheit; (v) Analysieren des ersten Signalstroms mit den personenbezogenen optischen Signalen in einer zweiten Verarbeitungseinheit und Ausgeben eines, insbesondere anonymisierten, ersten Analyseergebnisses an eine dritte Verarbeitungseinheit; (vi) Bewerten des ersten Analyseergebnisses anhand von wenigstens einem Kriterium in der dritten Verarbeitungseinheit und Erzeugen eines Triggersignals abhängig vom wenigsten einen Kriterium und Ausgeben des Triggersignals an die erste Datenverarbeitungseinheit; und (vii) Weiterleiten des anonymisierten Ausgangssignalstroms abhängig vom Triggersignal von der ersten Datenverarbeitungseinheit an einen Leitstand. Das Triggersignal kann beispielsweise einen voreingestellten Alarmierungsgrund als Textinformation umfassen.

Das erfindungsgemäße Verfahren erlaubt es, eine automatisierte datenschutzkonforme Überwachung einzusetzen, die die gesetzlichen Anforderungen erfüllt und einen umfangreichen Schutz bietet. Es werden verschiedene Techniken intelligent miteinander verbunden.

Durch die maschinelle Verarbeitung der personenbezogenen optischen und/oder akustischen Signale wird ein hohes Maß an Zuverlässigkeit und Überwachungsqualität bei deutlich geringeren Kosten gegenüber einer z.B. durch Personen bestreiften Überwachung erreicht.

Gemäß des beschriebenen Verfahrens können mittels eines für Videoüberwachung eingesetzten Systems neben den üblichen Bild- und/oder Videosequenzen zusätzliche Faktoren automatisch erfasst und ausgewertet werden. Unter anderem können Bewegungsmuster von Personen sowie verdächtige Gegenstände wie z.B. Gepäck am Bahnsteig situativ bedingt in die Bewertung einfließen. Das System kann in der Lage sein, beispielsweise typische Bewegungsabläufe von Taschendieben zu erkennen und Sicherheitskräfte zu alarmieren. Zudem kann das Überwachungssystem mit einer Gesichtserkennungssoftware ausgestattet sein, die den Abgleich von Personen mit bestehenden Daten, beispielsweise aus einer Datei mit gespeicherten Merkmalen, ermöglichen soll.

Das Verfahren erlaubt es vorteilhaft, ein Überwachungssystem mit einer Reihe von Fähigkeiten in Abhängigkeit vom Einsatzort sowie der lokalen Sicherheitsproblematik zu betreiben, um zielorientiert und ökonomisch eingesetzt zu werden. Das Verfahren ermöglicht beispielsweise das Detektieren von Personen (z.B. wie viele Personen gerade im Bild sind), das Verfolgen von Personen (z.B. wie schnell sich eine Person bewegt), das Verfolgen von Objekten, beispielsweise Fahrzeugen, das Wieder-Erkennen von Personen (z.B. wie lange sich die Person schon in der Szene aufhält), das Anonymisieren von Video-Streams (z.B. Skelett-Bildung mit sogenannter Human Pose Estimation), das Klassifizieren von Personen (z.B. Alter und/oder Geschlecht - ob das eine Gruppe Jugendlicher ist), sowie das Erkennen von Handlungen (z.B. Szenen von Gewalt erkennen). Diese Fähigkeiten können in nahezu Echtzeit zur Verfügung stehen, damit beispielsweise für die Alarmierung der Sicherheitsbehörden ausreichend Zeit zur Verfügung steht.

Das Anonymisieren von personenbezogenen optischen Signalen entfernt personenbezogene Informationen aus einem Bild, bzw. Video. Bei personenbezogenen Bildinformationen kann es sich um das Abbild einer Person selbst oder um der Person zuordenbare Informationen, z.B. KFZ-Kennzeichen, Fahrzeug o.ä. handeln. Die entfernten personenbezogenen optischen Signale werden anonymisiert, z.B. durch einen Avatar ersetzt. Beispielsweise kann eine Person durch ein Skelett mit sogenannter Human Pose Estimation oder dergleichen ersetzt werden. Der anonymisierte Teil kann auf einen beliebigen Hintergrund projiziert werden, wie etwa ein Standbild eines leeren Platzes, eine Skizze, ein einfarbiger oder mehrfarbiger Hintergrund und dergleichen. Der anonymisierte Teil mit dem Hintergrund kann als anonymisierter Ausgangssignalstrom, der die anonymisierten personenbezogenen optischen Signale enthält, ausgegeben werden.

Vorzugsweise werden nur Informationen, die einen personenbezogenen Charakter haben und der auch als solcher erkannt wurde, anonymisiert und weitergeleitet. Der nicht-anonymisierte Teil des Video-Streams wird nicht weitergeleitet. Damit kann vermieden werden, dass unverschlüsselte Aufnahmen von Personen oder personenbezogenen Objekten, die nicht als Personen oder personenbezogene Objekte erkannt wurden, weitergeleitet werden. Nur der anonymisierte Teil wird weitergeleitet.
Um personenbezogene Informationen aus dem Bild zu entfernen, müssen diese Informationen zunächst erkannt und analysiert werden, anschließend generiert das System einen neuen Video-Signalstrom als anonymisierten Ausgangssignalstrom, indem er die vorher erkannten Personen anonymisiert in einen neu erstellten Video-Signalstrom transferiert. In der anonymisierten Darstellung können zuordenbare Elemente vorhanden sein, die eine weitere Beobachtung der anonymisierten Person oder des personenbezogenen Objekts erlauben, die jedoch nicht der Person im Klarbild unmittelbar zuordenbar sind.

Mit dem erfindungsgemäßen Verfahren ist eine datenschutzkonforme Lösung geschaffen worden, um die Videoüberwachung im öffentlichen Raum unter Einhaltung der geltenden gesetzlichen Rahmenbedingungen einzusetzen. Vorteilhaft kann zum Detektieren von Personen in dem Signalstrom mit personenbezogenen optischen Signalen ein System wie beispielsweise das Tool "Detectron" von Facebook eingesetzt werden, welches im Vergleich zu anderen Systemen auch sehr kleine Personen noch zuverlässig erkennt.

Zusätzlich können beispielsweise auch Segmentierungsmasken und auch Ankerpunkte zum Erzeugen von Skelett-Modellen ausgegeben werden.

Beim Verfolgen (Tracking) von Personen können beispielsweise einfache Bewegungsvektoren zwischen zwei Video-Frames berechnet werden. Das Verfahren kann zunächst alle Personen in einem Video-Frame detektieren. Dann wird für jede Person ein Farb-Histogramm im sogenannten LAB-Farbraum zur Beschreibung aller Farben ermittelt. Das Farb-Histogramm kann mit den Koordinaten der Person zu einem Informationsvektor zusammengefügt werden. Im Folge-Frame kann für jede detektierte Person ein nächster Nachbar gesucht und daraus ein weiterer Informationsvektor bestimmt werden. Damit kann ein Abstandswert der beiden Informationsvektoren, beispielsweise als eine euklidische Distanz ermittelt werden. Dadurch kann der nächste Nachbar als die ursprünglich detektierte Person erkannt werden, wenn der Abstandswert unter einem vorgegebenen Grenzwert liegt.

Mit den Bewegungsdaten kann zusätzlich eine Bewegungskarte und/oder eine Wärmekarte erstellt werden, um zu zeigen, wo sich Personen länger aufhalten.

Alternativ zu dem Verfolgen von Personen können Personen in dem Signalstrom auch erkannt oder wiedererkannt werden. Damit kann überprüft werden, wie lange eine bestimmte Person bereits in der Szene verweilt oder umherläuft. Zum Wiedererkennen von Personen gibt es diverse Ansätze. Üblicherweise kann das Erkennen oder Wiedererkennen von Personen über eine Gesichtserkennung erfolgen.

Ist es aufgrund der Größenverhältnisse und der Perspektive nicht möglich, auf Gesichter als Merkmale zurückgreifen können, kann beispielsweise das Vorgehen bei einer Gesichtserkennung auf ganze Personen übertragen werden. Zweckmäßigerweise kann die Vorgehensweise wie folgt sein:
Es liegt ein Trainingsset mit x Personen (x größer 1000) vor. Von jeder Person liegen n Bilder in unterschiedlichen Posen (n größer 2) vor. Ein Klassifizierer, beispielsweise ein neuronales Netz, wird auf die ganze Person trainiert, wobei die Anzahl der Klassen gleich x gewählt wird. Dabei können Gewichtsfaktoren beim Training des Klassifizierers bestimmt werden und dadurch eine Klassifikation einer Person nach Beendigung des Trainings ermöglicht werden.

Es kann dann beispielsweise weiter mit einer Triplet Loss Funktion trainiert werden. Diese minimiert den Abstand bei zwei gleichen Personen und maximiert den Abstand bei zwei unterschiedlichen Personen. Zweckmäßigerweise werden dafür Triplets mit Methoden wie Online Mining oder Hard Negative Samples gewählt. Am Ende erhält man eine sogenannte niedrigdimensionale Einbettung, welche eine Person möglichst eindeutig beschreibt, z.B. über Kleidung, Haarfarbe, Größe, oder ähnliche Merkmale.

Mit Hilfe von neuronalen Netzen lassen sich Personen oder Teile von Personen in einem Bild/Video vorteilhaft detektieren und auswerten.

Bei Bildern mit geringer Auflösung im Bereich Detektieren und Beobachten kann beispielsweise mit einer Avatarisierung der detektierten Person ein zu einer Wärmebildkamera vergleichbares günstiges Ergebnis erzielt werden.

Um Videos von Personen in hoher Auflösung zu anonymisieren, können handelsübliche Systeme wie beispielsweise das Tool OpenPose eingesetzt werden. Dabei kann ein neuronales Netz, etwa das sogenannte Convolutional Neural Network (CNN), verwendet werden.

Alternativ kann hier auch auf ein Abstrahieren der detektierten Person, beispielsweise ein sogenanntes Avatarisieren über die detektierte Silhouette der Person, als Strichbild oder einen starren Platzhalter ("Spielfigur") zurückgegriffen werden.

Bei der Klassifizierung von Personen wird vor allem versucht, das Alter und das Geschlecht der Personen zu bestimmen. Ähnlich wie bei der Gesichtserkennung gibt es hier diverse Implementierungen mit der Basis auf Gesichtern. Wenn in den vorhandenen Szenen in dem Signalstrom mit personenbezogenen Signalen aber keine oder zu kleine Gesichter vorhanden sind, können die Netzwerke vorteilhaft mit ähnlichen Methoden auf ganze Personen trainiert werden. Dazu kann beispielsweise eine kommerzielle Software wie Dataset Market 1501 verwendet werden.

Vorteilhaft können Labels und Alter zu den Daten hinzugefügt. So können die Daten beispielsweise als männlich/weiblich und in Altersklassen wie Kind/Teenager/Erwachsener/Senior markiert werden. Anschließend können die Merkmale sowohl einzeln als auch in Multi-Label Netzen trainiert werden.

Eine erste Datenverarbeitungseinheit wie beispielsweise ein Video-Server kann zweckmäßig eingesetzt werden, um Videosequenzen zu speichern und/oder Triggersignale weiterzuleiten. Triggersignale können abhängig von wenigstens einem Kriterium nach Analysieren der Videosignale in einer Analyseeinheit erzeugt werden, wenn beispielsweise ein auffälliges Verhalten von Personen erkannt wird, oder die Zahl an detektierten Personen auffällig zunimmt.

Analyseergebnisse können erkannte Eigenschaften und/oder Vorgänge mit einer Fehlerwahrscheinlichkeit als Textinformation sein. Dazu können Bewegungsdaten der Personen analysiert und mit gespeicherten Sequenzen verglichen werden. Die Aufenthaltsdauer von Personen in einem bestimmten, beispielsweise verbotenen, Bereich kann registriert werden.

Abhängig von solchen Verhaltensmustern wie konkreten Handlungen oder Positionen von Personen kann ein Triggersignal erzeugt werden. Dieses Triggersignal kann über eine Datenverarbeitungseinheit an einen Leitstand weitergeleitet werden. Zusammen mit diesem Triggersignal kann die Datenverarbeitungseinheit auch den anonymisierten Ausgangssignalstrom weiterleiten. Es kann jedoch auch nur das Triggersignal oder auch nur der anonymisierte Ausgangssignalstrom weitergeleitet werden. Personal im Leitstand kann dann abhängig von der erkannten Lage entsprechende Maßnahmen einleiten.

Alternativ kann der Leitstand die empfangenen Daten auch wiederum automatisiert verarbeiten und eigenständig entsprechende Maßnahmen einleiten.

Alternativ können mit dem erfindungsgemäßen Verfahren beispielsweise statt Personen auch Kraftfahrzeuge oder andere technische Gebilde überwacht werden.

Zusätzlich können die personenbezogenen optischen Signale mit akustischen Signalen wie beispielsweise Audiosignalen über akustische Sensoren verknüpft werden, um weitere Information über Handlungen in einem bestimmten Bereich zu erhalten. Alternativ können in einer einfacheren Ausprägung auch nur akustische Signale verwendet werden.

Insbesondere die Datenfusion der optischen mit den akustischen Signalen bietet Vorteile bei der Analyse, da zusätzlich bestimmte Geräuschmuster identifiziert werden können. Dabei können Geräusche wie Hilfeschreie, Glasbruch detektiert werden. Es kann eine Sprachanalyse eingesetzt werden.

Alternativ können weitere Informationen von beispielsweise Bewegungssensoren, Thermostaten, Türalarmsensoren und ähnlichen Sensoren hinzugezogen werden.

Die genannten Informationen können in einer weiteren Verarbeitungseinheit zu einem Lagebild gefügt werden, wobei die Verarbeitungseinheit dann anhand von vorgegebenen Kriterien eine Bewertung der Lage vornimmt und bei Überschreiten vorgegebener Grenzen ein Triggersignal setzen kann.

Nach Setzen des Triggersignals kann das Triggersignal allein oder auch zusammen mit dem anonymisierten Ausgangssignalstrom über die Datenverarbeitungseinheit an den Leitstand weitergeleitet werden. Im Leitstand kann nach einer nochmaligen Beurteilung der Lage (durch Personal oder auch automatisiert) entschieden werden, welche Maßnahmen zu ergreifen sind, um eine Situation zu entschärfen oder in den Griff zu bekommen, beispielsweise durch Rufen der Polizei, durch ein akustisches Signal und/oder Lichtsignale oder durch eine Ferndurchsage.

Die Erfassungseinheiten sind dabei zweckmäßigerweise in dem zu überwachenden Bereich installiert und beispielsweise über LAN verbunden. Die Analyse der Daten und Beurteilung der Lage kann dezentral und/oder remote erfolgen. Auch ist denkbar, die Verarbeitung der Signalströme mittels Cloud-Services über gesicherte Leitungen in zertifizierten Rechenzentren durchzuführen. Der Leitstand kann dabei auch über ein WAN-Netzwerk verbunden sein.

Einzelne Aspekte des Verfahrens mögen durchaus im Stand der Technik bekannt sein, jedoch stellt die Orchestrierung des Verfahrens eine neue Qualität der Überwachung sicher. Entscheidende Vorteile können über die Erstellung des anonymisierten Ausgangssignalstroms zusammen mit der Analyse des Signalstroms mit personenbezogenen optischen Signalen erreicht werden. So können nicht nur Personen detektiert werden und ihre Aktionen aufgezeichnet werden. Die Datenverarbeitungseinheit stellt auch eine Synchronisation der verschiedenen Signale und Analyseergebnisse sicher, da die Signale mit einem Zeitstempel versehen sein können. Analyseergebnisse können erkannte Eigenschaften, Events mit einer Fehlerwahrscheinlichkeit als Textinformation sein.

Da jede Erfassungseinheit über eine dedizierte Adresse identifizierbar ist, können die Signale eindeutig zugeordnet werden. Jedoch können auch über Schalteinheiten, wie beispielsweise Netzwerk-Switches, Adressgruppen gebildet werden, wodurch Orte getrennt erfasst werden können.

Durch das Anwenden von Methoden der Künstlichen Intelligenz können Lernverfahren integriert werden, sodass übliche Hintergrundsignale wie beispielsweise Hintergrundgeräusche herausgefiltert werden können. Zusätzliche Information kann miteinfließen, beispielsweise der Anwohner vor Ort, sodass die Lagebewertung auf fundiertem Wissen basieren kann. So kann Expertenwissen einfließen, beispielsweise, wo hätte wie eingegriffen werden sollen.

Die Position von Erfassungseinheiten kann auf Grund dieses Hintergrundwissens geeignet gewählt und/oder adaptiert werden, die Anzahl von Videokameras und Mikrophonen mit entsprechender Auflösung und Reichweite kann je nach Anforderung optimiert werden.

Gemäß einer vorteilhaften Ausgestaltung kann das Verfahren weiter gekennzeichnet sein durch (viii) das Erfassen von akustischen Signalen, insbesondere Audiosignalen, mit wenigstens einer zweiten Erfassungseinheit und (ix) das Analysieren der akustischen Signale mit einer vierten Verarbeitungseinheit und Umsetzen der analysierten akustischen Signale in ein anonymisiertes Analyseergebnis.

Zusätzlich können so die personenbezogenen optischen Signale mit akustischen Signalen wie beispielsweise Audiosignalen über akustische Sensoren verknüpft werden, um weitere Information über Handlungen in einem bestimmten Bereich zu erhalten. Alternativ können in einer einfacheren Ausprägung auch nur akustische Signale verwendet werden. Insbesondere die Datenfusion der optischen mit den akustischen Signalen bietet Vorteile bei der Analyse, da zusätzlich bestimmte Geräuschmuster identifiziert werden können. Dabei können Geräusche wie Hilferufe, Glasbruch und dergleichen detektiert werden. Es kann eine Sprachanalyse eingesetzt werden.

Gemäß einer vorteilhaften Ausgestaltung kann das Verfahren gekennzeichnet sein durch Verarbeiten und/oder Speichern des ersten Signalstroms, insbesondere von personenbezogenen optischen Signalen in Klarbildformat, in einer zweiten Datenverarbeitungseinheit. Die zweite Datenverarbeitungseinheit kann dabei nicht nur dem Speichern des Signalstroms, sondern auch der Auswertung und Verarbeitung des Signalstroms dienen. Die Datenverarbeitungseinheit kann auch über Cloud-Services verfügen, bzw. darüber angebunden sein.

Gemäß einer vorteilhaften Ausgestaltung kann das Verfahren dadurch gekennzeichnet sein, dass zum Anonymisieren der personenbezogenen optischen Signale eine Detektion wenigstens einer Person mit einer anschließenden Anonymisierung der detektierten Person stattfindet. Insbesondere kann die Detektion der Person über eine Verarbeitung der personenbezogenen optischen Signale mittels eines Kalman-Filters erfolgen.

Das Anonymisieren von personenbezogenen optischen Signalen entfernt personenbezogene Informationen aus einem Bild, bzw. Video. Vorteilhaft kann zum Detektieren von Personen in dem Signalstrom mit personenbezogenen optischen Signalen ein handelsübliches System wie beispielsweise das Tool "Detectron" von Facebook eingesetzt werden, welches im Vergleich zu anderen Systemen auch sehr kleine Personen noch zuverlässig erkennt. Zusätzlich können beispielsweise auch Segmentierungsmasken und auch Ankerpunkte zum Erzeugen von Skelett-Modellen ausgegeben werden.

Das Herausfiltern von Abbildungen von realen Personen und stattdessen Einfügen von Skelett-Modellen in den Ausgangssignalstrom ermöglicht so eine zuverlässige Anonymisierung der detektierten Personen. Ein Kalman-Filter stellt ein geeignetes Filterverfahren zum Detektieren und Verfolgen einer Person in einem Multi-Kamera-System dar.

Gemäß einer vorteilhaften Ausgestaltung kann das Verfahren dadurch gekennzeichnet sein, dass das Verfolgen einer Person in dem ersten Signalstrom mit den personenbezogenen optischen Signalen folgende Schritte umfasst: (i) Detektieren der Person in einem Video-Frame; (ii) Ermitteln eines Farb-Histogramms für die Person; (iii) Fügen des Farb-Histogramms und Koordinaten der Person zu einem Informationsvektor; (iv) Suchen in einem folgenden Video-Frame für jede detektierte Person nach einem nächsten Nachbar der Person und daraus Bestimmen eines weiteren Informationsvektors; (v) Bestimmen eines Abstandswertes der beiden Informationsvektoren; und (vi) Erkennen des nächsten Nachbarn als die ursprünglich detektierte Person, wenn der Abstandswert unter einer vorgegebenen Grenze liegt.

Beim Verfolgen (Tracking) von Personen können so beispielsweise einfache Bewegungsvektoren zwischen zwei Video-Frames berechnet werden. Ein Abstandswert der beiden Informationsvektoren, kann beispielsweise als eine euklidische Distanz ermittelt werden. Dadurch kann der nächste Nachbar als die ursprünglich detektierte Person erkannt werden, wenn der Abstandswert unter einem vorgegebenen Grenzwert liegt.

Gemäß einer vorteilhaften Ausgestaltung kann das Verfahren dadurch gekennzeichnet sein, dass aus Bewegungsdaten der detektierten Person wenigstens eine Bewegungskarte und/oder eine Wärmekarte erstellt werden. So können alternativ weitere Informationen von beispielsweise Bewegungssensoren, Thermostaten, Türalarmsensoren und ähnlichen Sensoren mit integriert werden. Auf diese Weise lässt sich günstigerweise ein Bewegungsmuster leichter bewerten und so die Gesamtlage der überwachten Szene besser beurteilen.

Gemäß einer vorteilhaften Ausgestaltung kann das Verfahren dadurch gekennzeichnet sein, dass das Erkennen einer Person in dem ersten Signalstrom mit den personenbezogenen optischen Signalen folgende Schritte umfasst: (i) Vorgeben eines Trainingssets einer bestimmten Anzahl von Personen, wobei von jeder Person eine weitere Anzahl an Bildern in unterschiedlichen Posen benutzt wird; (ii) Trainieren eines Klassifizierers, wobei eine Anzahl an Klassen des Klassifizierers der Anzahl der Personen entspricht; und (iii) Trainieren mit einer Triplet Loss Funktion. Als Klassifizierer kann zweckmäßigerweise ein neuronales Netz eingesetzt werden. Als Verlustfunktion beim Trainieren des neuronalen Netzes kann dabei vorteilhaft eine sogenannte Triplet Loss Funktion verwendet werden, um besonders günstige Fortschritte in der Bilderkennung zu erreichen. Besonders vorteilhaft können auch ähnliche Verfahren der nichtlinearen Optimierung wie Bayes-Netzwerke eingesetzt werden.

Gemäß einer vorteilhaften Ausgestaltung kann das Verfahren dadurch gekennzeichnet sein, dass das Trainieren mit der Triplet Loss Funktion folgende Schritte umfasst: (iv) Minimieren des Abstandswerts bei zwei gleichen Personen; und (v) Maximieren des Abstandswerts bei zwei unterschiedlichen Personen. Damit lassen sich besonders zielführend Schätzwerte der Verlustfunktion erreichen, mit denen ein günstiges Training des eingesetzten Klassifizierers möglich ist.

Gemäß einer vorteilhaften Ausgestaltung kann das Verfahren dadurch gekennzeichnet sein, dass zum Detektieren von Personen in dem ersten Signalstrom mit den personenbezogenen optischen Signalen neuronale Netze verwendet werden. Als besonders zweckmäßig haben sich dabei neuronale Netze wie die sogenannten Convolutional Neural Networks (CNN) herausgestellt.

So lassen sich Personen oder Teile von Personen in einem Bild/Video detektieren und auswerten.

Gemäß einer vorteilhaften Ausgestaltung kann das Verfahren dadurch gekennzeichnet sein, dass eine detektierte Person in dem ersten Signalstrom mit den personenbezogenen optischen Signalen nach wenigstens einem personenbezogenen Merkmal klassifiziert wird, insbesondere wobei das personenbezogene Merkmal Alter und/oder Geschlecht umfasst.

Über die beiden Merkmale Alter und Geschlecht ist es möglich, eine vorliegende Lage zuverlässiger zu beurteilen, da bestimmte Verhaltensweisen eben altersabhängig und/oder geschlechtsabhängig eingestuft werden können. Damit lässt sich leichter ein Abgleich mit gespeicherten Szenen durchführen und so eine Bewertung der Lage mit entsprechend hohem Vertrauensintervall abgeben.

Gemäß einer vorteilhaften Ausgestaltung kann das Verfahren dadurch gekennzeichnet sein, dass eine anonymisierte detektierte Person in dem anonymisierten Ausgangssignalstrom mit Informationen zu dem personenbezogenen Merkmal versehen wird, insbesondere mit Informationen zu Alter und/oder Geschlecht versehen wird. Sind beispielsweise Avatare in dem anonymisierten Ausganssignalstrom mit entsprechender Kennzeichnung versehen, so lässt sich im Leitstand auf Grund dieser zusätzlichen Information eine Szene mit Avataren zuverlässiger beurteilen. Auch ist bei einer Vielzahl von Personen eine leichtere Unterscheidung möglich, was den Überblick über eine komplexe Szene erleichtert.

Gemäß einer vorteilhaften Ausgestaltung kann das Verfahren dadurch gekennzeichnet sein, dass Analyseergebnisse der zweiten und/oder vierten Verarbeitungseinheit in der dritten Verarbeitungseinheit nach wenigstens einem Kriterium bewertet werden und abhängig von wenigstens einem Kriterium das Triggersignal erzeugt wird. Zusätzlich können so die personenbezogenen optischen Signale mit akustischen Signalen wie beispielsweise Audiosignalen über akustische Sensoren verknüpft werden, um weitere Information über Handlungen in einem bestimmten Bereich zu erhalten.

Insbesondere die Datenfusion der optischen mit den akustischen Signalen bietet Vorteile bei der Analyse, da zusätzlich bestimmte Geräuschmuster identifiziert werden können. Dabei können Geräusche wie Hilfeschreie, Glasbruch detektiert werden. Es kann eine Sprachanalyse eingesetzt werden.

Nach einem weiteren Aspekt der Erfindung wird ein System zum Verarbeiten von personenbezogenen optischen und/oder akustischen Signalen vorgeschlagen, umfassend wenigstens - eine erste Erfassungseinheit für optische Signale, insbesondere Bildsignale und/oder Videosignale, zur Erzeugung eines ersten Signalstroms mit personenbezogenen optischen Signalen; - eine erste Verarbeitungseinheit zum Anonymisieren von personenbezogenen optischen Signalen im ersten Signalstrom und zum Ausgeben eines anonymisierten Ausgangssignalstroms; - eine zweite Verarbeitungseinheit zum Analysieren von personenbezogenen optischen Signalen im ersten Signalstrom und Ausgeben eines ersten Analyseergebnisses; - eine dritte Verarbeitungseinheit zum Bewerten des ersten Analyseergebnisses und zum Ausgeben eines Triggersignals abhängig von wenigstens einem Kriterium; - eine erste Datenverarbeitungseinheit zum Weiterleiten des anonymisierten Ausgangssignalstroms und/oder des Triggersignals abhängig vom Kriterium; - einen Leitstand zum Empfangen zumindest des anonymisierten Ausgangssignalstroms und/oder des Triggersignals abhängig von dem Triggersignal, wobei das System zum Ausführen eines Verfahrens nach einem der vorhergehenden Ansprüche vorgesehen ist.

Mit dem erfindungsgemäßen System steht ein Überwachungssystem mit einer Reihe von Fähigkeiten zur Verfügung, das in Abhängigkeit vom Einsatzort sowie der lokalen Sicherheitsproblematik betrieben werden kann und zielorientiert und ökonomisch eingesetzt werden kann. Das System ermöglicht beispielsweise das Detektieren von Personen (z.B. wie viele Personen gerade im Bild sind), das Verfolgen von Personen (z.B. wie schnell sich eine Person bewegt), das Wieder-Erkennen von Personen (z.B. wie lange sich die Person schon in der Szene aufhält), das Anonymisieren von Video-Streams (z.B. Skelett-Bildung mit dem Tool Human Pose Estimation), das Klassifizieren von Personen (z.B. Alter und/oder Geschlecht - ob das eine Gruppe Jugendlicher ist), sowie das Erkennen von Handlungen (z.B. Szenen von Gewalt erkennen). Diese Fähigkeiten können in nahezu Echtzeit zur Verfügung stehen, damit beispielsweise für die Alarmierung der Sicherheitsbehörden ausreichend Zeit zur Verfügung steht.

Das Anonymisieren von personenbezogenen optischen Signalen entfernt personenbezogene Informationen aus einem Bild, bzw. Video. Bei personenbezogenen Bildinformationen kann es sich um das Abbild einer Person selbst oder um der Person zuordenbare Informationen, z.B. KFZ-Kennzeichen o.ä. handeln. Um personenbezogene Informationen aus dem Bild zu entfernen, müssen diese Informationen zunächst erkannt und analysiert werden, anschließend generiert das System einen neuen Video-Signalstrom als anonymisierten Ausgangssignalstrom, indem er die vorher erkannten Personen anonymisiert in einen neu erstellten Video-Signalstrom transferiert.

Abhängig von bestimmten Verhaltensmustern wie konkreten Handlungen oder Positionen von Personen kann ein Triggersignal erzeugt werden. Dieses Triggersignal kann über eine erste Datenverarbeitungseinheit an einen Leitstand weitergeleitet werden. Zusammen mit diesem Triggersignal kann die Datenverarbeitungseinheit auch den anonymisierten Ausgangssignalstrom weiterleiten. Es kann jedoch auch nur das Triggersignal oder auch nur der anonymisierte Ausgangssignalstrom weitergeleitet werden. Diese Entscheidung kann abhängig von dem erfüllten Entscheidungskriterium getroffen werden.

Mit dem erfindungsgemäßen System ist eine datenschutzkonforme Lösung geschaffen worden, um die Videoüberwachung im öffentlichen Raum unter Einhaltung der gesetzlichen Rahmenbedingungen einzusetzen.

Gemäß einer vorteilhaften Ausgestaltung kann das System weiter umfassen: - eine zweite Erfassungseinheit für akustische Signale, insbesondere Audiosignale; - eine vierte Verarbeitungseinheit zum Analysieren der akustischen Signale und zum Ausgeben eines zweiten Analyseergebnisses an die dritte Verarbeitungseinheit. Zusätzlich können so die personenbezogenen optischen Signale mit akustischen Signalen wie beispielsweise Audiosignalen über akustische Sensoren verknüpft werden, um weitere Information über Handlungen in einem bestimmten Bereich zu erhalten. Alternativ können in einer einfacheren Ausprägung auch nur akustische Signale verwendet werden. Insbesondere die Datenfusion der optischen mit den akustischen Signalen bietet Vorteile bei der Analyse, da zusätzlich bestimmte Geräuschmuster identifiziert werden können. Dabei können Geräusche wie Hilfeschreie, Glasbruch detektiert werden. Es kann eine Sprachanalyse eingesetzt werden.

Gemäß einer vorteilhaften Ausgestaltung können die zweite Erfassungseinheit und die vierte Verarbeitungseinheit integriert ausgebildet sein. Damit lässt sich eine besonders kompakte Version des erfindungsgemäßen Systems erzielen, das auch entsprechend gut integriert im überwachten Bereich untergebracht werden kann. Außerdem können so analoge Signale gleich vor Ort in digitale Signale umgewandelt werden, was die Weiterleitung und Speicherung der Signale erleichtert.

Gemäß einer vorteilhaften Ausgestaltung kann die dritte Verarbeitungseinheit zum gemeinsamen Bewerten des ersten und zweiten Analyseergebnisses nach dem wenigstens einen Kriterium vorgesehen sein. Zusätzlich können so die Analyseergebnisse von personenbezogenen optischen Signalen mit akustischen Signalen wie beispielsweise Audiosignalen über akustische Sensoren verknüpft werden, um weitere Information über Handlungen in einem bestimmten Bereich zu erhalten. Insbesondere die Datenfusion der optischen mit den akustischen Signalen bietet Vorteile bei der Analyse, da zusätzlich bestimmte Geräuschmuster identifiziert werden können. Dabei können Geräusche wie Hilfeschreie, Glasbruch detektiert werden. Es kann eine Sprachanalyse eingesetzt werden.

Gemäß einer vorteilhaften Ausgestaltung kann eine zweite Datenverarbeitungseinheit zur Verarbeitung des ersten Signalstroms mit personenbezogenen optischen Signalen im Klarbildformat vorgesehen sein. Die zweite Datenverarbeitungseinheit kann dabei nicht nur dem Speichern des Signalstroms, sondern auch der Auswertung und Verarbeitung des Signalstroms dienen. Die Datenverarbeitungseinheit kann auch über Cloud-Services verfügen, bzw. darüber angebunden sein.

Gemäß einer vorteilhaften Ausgestaltung kann wenigstens eine Schalteinheit zur Integration, insbesondere zum Multiplexen von optischen und/oder akustischen Signalen vorgesehen sein. Die Schalteinheiten können zum Bündeln von Signalen aus unterschiedlichen Erfassungseinheiten dienen, sodass die verschiedenen Signale in einen Signalstrom integriert werden können. Als Schalteinheit können dafür beispielsweise Netzwerk-Switches eingesetzt werden. Auch ist möglich, dass die Schalteinheit bestimmte Erfassungseinheiten nach vorgegebenen Kriterien auswählt oder periodisch durchschaltet.

Auch können Erfassungseinheiten je nach Analyseergebnis aus den personenbezogenen Signalen und/oder nach Lagebeurteilung dazugeschaltet werden.

### Zeichnung

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine Abfolge von beim Anonymisieren eines Video-Streams nach einem Ausführungsbeispiel der Erfindung;
- Fig. 2: ein Systemdiagram zum Verarbeiten von personenbezogenen optischen und/oder akustischen Signalen nach einem Ausführungsbeispiel der Erfindung;
- Fig. 3: ein Ablaufschema für ein Verfahren zum Verarbeiten von personenbezogenen optischen und/oder akustischen Signalen nach einem Ausführungsbeispiel der Erfindung;
- Fig. 4: ein Ablaufschema für ein Verfahren zum Erfassen und Analysieren von personenbezogenen akustischen Signalen nach einem Ausführungsbeispiel der Erfindung;
- Fig. 5: ein Ablaufschema für ein Verfahren zum Verfolgen einer Person in einem ersten Signalstrom mit den personenbezogenen optischen Signalen nach einem Ausführungsbeispiel der Erfindung; und
- Fig. 6: ein Ablaufschema für ein Verfahren zum Erkennen einer Person in dem ersten Signalstrom mit den personenbezogenen optischen Signalen nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

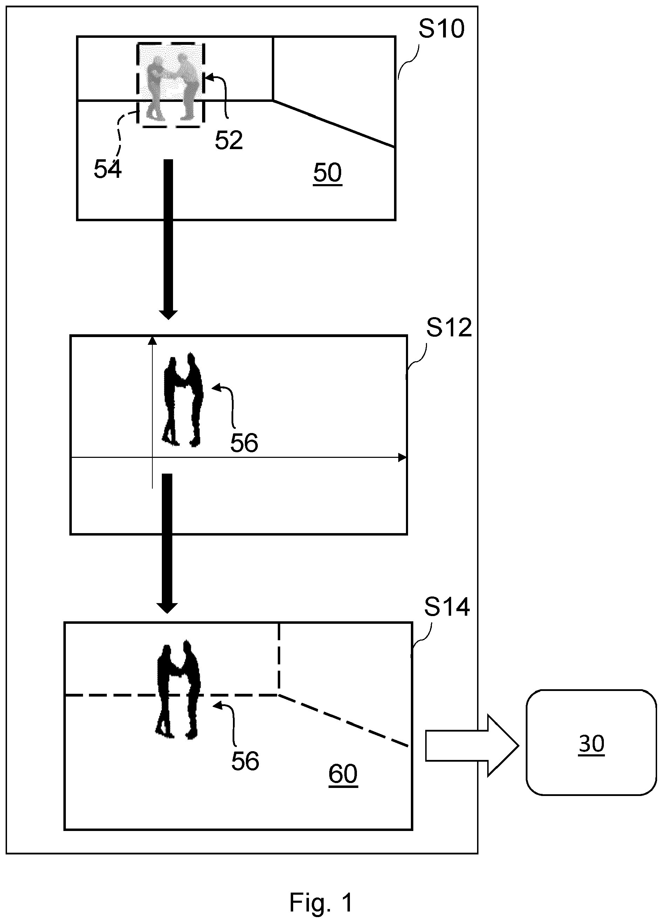

Figur 1 zeigt zur Erläuterung der Erfindung eine Abfolge von beim Anonymisieren von personenbezogenen optischen Signalen eines Video-Streams nach einem Ausführungsbeispiel der Erfindung.

In Schritt S10 wird ein Bild mit Hilfe einer Videokamera erfasst und einer direkten Analyse mit Erkennen von Personen 52 und/oder Objekten unterzogen. Zwei Personen 52 sind offensichtlich in einer Umgebung 50 aneinander geraten.

Die erkannten Personen 52 werden aus dem Bild ausgeschnitten. Die ausgeschnittenen Personen 52 werden in Schritt S12 direkt anonymisiert und mit Koordinaten zwischengespeichert. Das Klarbild der Situation wird verworfen. In Schritt S14 werden die ausgeschnittenen anonymisierten Personen 56 an der entsprechenden Position in ein Hintergrundbild 60 eingesetzt, wie etwa ein Standbild der leeren Umgebung 50, eine Skizze, ein einfarbiger oder mehrfarbiger Hintergrund und dergleichen.

Bei den Schritten S10 bis S14 handelt es sich um ein geschlossenes System vor Ort, bei dem kein Zugriff von außen möglich ist. Das anonymisierte Bild kann als anonymisierter Ausgangssignalstrom an eine Leitstelle 30 ausgegeben und gespeichert werden.

Das Vorgehen garantiert eine hohe Anonymisierungssicherheit. Nur eine Person 52, die als Person erkannt wurde, kann ausgeschnitten und anonymisiert in die "leere" Szene, d.h. den Hintergrund 60, gesetzt werden. Würde eine Person nicht erkannt, z.B. wegen schlechten Lichtverhältnissen, ungünstiger Position zur Kamera etc., würde die Person in der Szene einfach fehlen, Aufnahme, Analyse, Ausschneiden, Anonymisieren und Einsetzen können in Echtzeit, "on the fly", erfolgen. Dies erfolgt im laufenden Video-Stream.

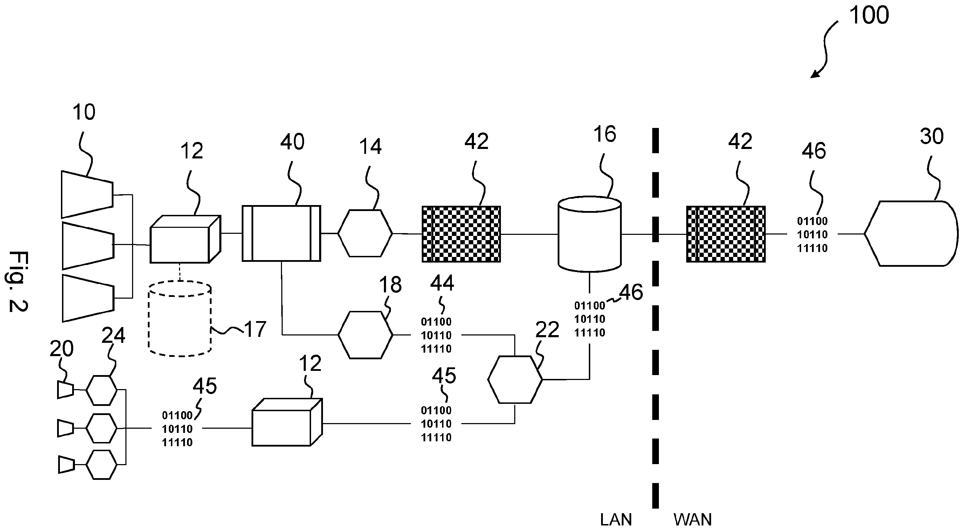

Figur 2 zeigt ein Systemdiagram eines Systems 100 zum Verarbeiten von personenbezogenen optischen und/oder akustischen Signalen nach einem Ausführungsbeispiel der Erfindung.

Das System 100 umfasst erste Erfassungseinheiten 10 für optische Signale, insbesondere Bildsignale und/oder Videosignale, zur Erzeugung eines ersten Signalstroms 40 mit personenbezogenen optischen Signalen. Die Signale der Erfassungseinheiten 10 werden über eine Schalteinheit 12, beispielsweise einen Netzwerk-Switch, in einen ersten Signalstrom 40 integriert. Als Erfassungseinheiten 10 können beispielsweise Videosensoren wie klassische Videokameras vorgesehen sein, welche einen Videosignalstrom nach dem Real-Time Transport Protocol (RTP) über IP LAN ausgeben können. Die Schalteinheit 12 bündelt die Signale der ersten Erfassungseinheiten 10 in den ersten Signalstrom 40.

Der Signalstrom 40 wird an eine erste Verarbeitungseinheit 14 weitergeleitet zum Anonymisieren der personenbezogenen optischen Signale im ersten Signalstrom 40, wo die personenbezogenen Signale über Methoden der künstlichen Intelligenz irreversibel anonymisiert, beispielsweise avatarisiert werden können. Anschließend wird ein anonymisierter Ausgangssignalstrom 42 als Avatarvideo ausgegeben. Auch der anonymisierte Ausgangssignalstrom 42 kann als RTP Video-Stream ausgegeben werden.

Die personenbezogenen optischen Signale im ersten Signalstrom 40 werden in einer zweiten Verarbeitungseinheit 18 analysiert und als erste Analyseergebnisses 44 ausgegeben. Analyseergebnisse 44 können beispielsweise erkannte Eigenschaften und/oder Vorgänge mit einer Fehlerwahrscheinlichkeit als Textinformation sein.

In einer dritten Verarbeitungseinheit 22 wird das erste Analyseergebnis 44 bewertet und ein Triggersignal 46 abhängig von wenigstens einem Kriterium ausgegeben. Einzelne Sensoranalyseergebnisse 44 können dabei zu einer übergeordneten Lage analysiert und bewertet werden. Das Triggersignal 46 kann beispielsweise einen voreingestellten Alarmierungsgrund als Textinformation umfassen.

Eine erste Datenverarbeitungseinheit 16 empfängt und speichert den anonymisierten Ausgangssignalstrom 42, verarbeitet das Triggersignal 46, kommuniziert mit dem Leitstand 30 und leitet den anonymisierten Ausgangssignalstrom 42 sowie eventuell das Triggersignal 46, abhängig vom Kriterium, an den Leitstand 30 weiter.

Der Leitstand 30 empfängt den anonymisierten Ausgangssignalstrom 42 und/oder das Triggersignal 46 abhängig von dem Kriterium. Der Leitstand 30 wird dadurch von der ersten Datenverarbeitungseinheit 16 aufgeschaltet und kann die Lage manuell oder automatisiert begutachten.

Eine zweite Datenverarbeitungseinheit 17 kann optional zur Verarbeitung sowie zum mindestens temporären Speichern des ersten Signalstroms 40 mit personenbezogenen optischen Signalen im Klarbildformat vorgesehen sein.

Das in Figur 2 dargestellte Ausführungsbeispiel umfasst weiter zweite Erfassungseinheiten 20 für akustische Signale, insbesondere Audiosignale, welche in vierten Verarbeitungseinheiten 24 analysiert und als zweites Analyseergebnis 45 an die dritte Verarbeitungseinheit 22 ausgegeben werden.

Die zweite Erfassungseinheit 20, die beispielsweise mehrere Mikrophone umfassen kann, und die vierte Verarbeitungseinheit 24 können integriert ausgebildet sein. Deshalb ist in Figur 2 jede zweite Erfassungseinheit 20 mit einer vierten Verarbeitungseinheit 24 verbunden. Die Schalteinheit 12 bündelt die zweiten Analyseergebnisse 45 der verschiedenen Analyseeinheiten 24 und leitet diese integriert an die dritte Verarbeitungseinheit 22 weiter.

Die dritte Verarbeitungseinheit 22 ist zum gemeinsamen Bewerten des ersten und zweiten Analyseergebnisses 44, 45 nach dem wenigstens einen Kriterium vorgesehen. Die dritte Verarbeitungseinheit 22 generiert das Triggersignal 46 abhängig von dem wenigstens einen Kriterium und leitet das Triggersignal 46 an die erste Datenverarbeitungseinheit 16 weiter, die wiederum abhängig von dem Triggersignal 46 und den vorgegebenen Einstellungen den anonymisierten Ausgangssignalstrom 42 und/oder das Triggersignal 46 an den Leitstand 30 weiterleitet.

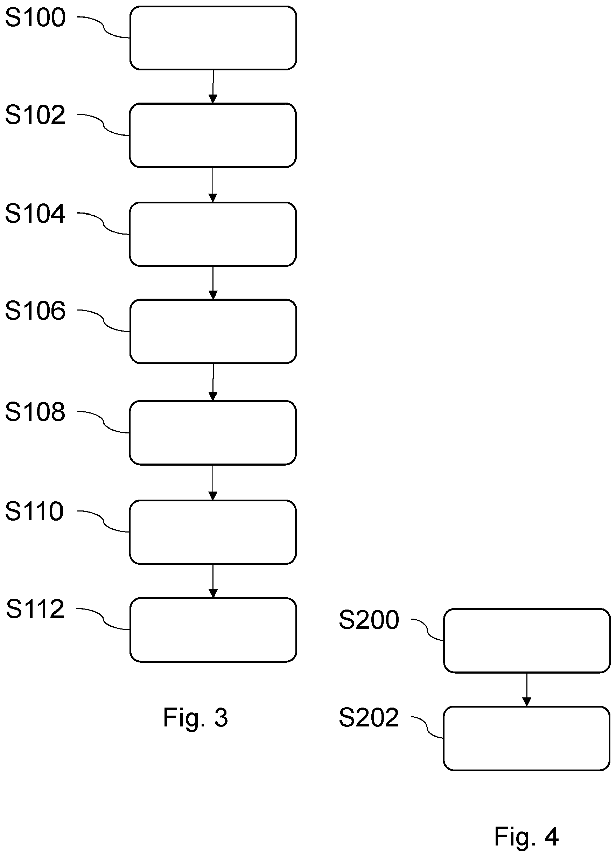

Das in Figur 2 dargestellte System 100 ist zur Durchführung eines Verfahrens zum Verarbeiten von personenbezogenen optischen und/oder akustischen Signalen nach einem Ausführungsbeispiel der Erfindung, wie es beispielsweise in der Abfolge in Figur 1 oder dem Ablaufschema in Figur 3 gezeigt ist, vorgesehen.

Das Verfahren in Figur 3 ist gekennzeichnet durch folgende Schritte.
In Schritt S100 werden optische Signale, insbesondere Bildsignale und/oder Videosignale, mit wenigstens einer ersten Erfassungseinheit 10 zur Erfassung optischer Signale erfasst. In Schritt S102 werden die optischen Signale in einem ersten Signalstrom 40 an eine erste Verarbeitungseinheit 14 weitergeleitet. Anschließend werden die personenbezogenen optischen Signale im ersten Signalstrom 40 in der ersten Verarbeitungseinheit 14 in Schritt S104 anonymisiert und in Schritt S106 wird der anonymisierte Ausgangssignalstrom 42, der die anonymisierten personenbezogenen optischen Signale enthält, an eine erste Datenverarbeitungseinheit 16 ausgegeben. In Schritt S108 wird der erste Signalstrom 40 mit den personenbezogenen optischen Signalen in einer zweiten Verarbeitungseinheit 18 analysiert und ein, insbesondere anonymisiertes, erstes Analyseergebnis 44 an eine dritte Verarbeitungseinheit 22 ausgegeben. Das erste Analyseergebnis 44 wird anhand von wenigstens einem Kriterium in der dritten Verarbeitungseinheit 22 im Schritt S110 bewertet und ein Triggersignal 46 abhängig vom wenigsten einen Kriterium erzeugt sowie an die erste Datenverarbeitungseinheit 16 ausgegeben. In Schritt S112 wird der anonymisierte Ausgangssignalstrom 42 abhängig vom Triggersignal 46 von der ersten Datenverarbeitungseinheit 16 an einen Leitstand 30 ausgegeben.

Die Schritte S108 und S110, in denen die personenbezogenen Signale analysiert und bewertet werden, können auch parallel zu den Schritten S104 und S106, in denen der erste Signalstrom 40 anonymisiert wird, durchgeführt werden.

Nach dem erfindungsgemäßen Verfahren kann In der zweiten Datenverarbeitungseinheit 17 der erste Signalstrom 40, insbesondere mit personenbezogenen optischen Signalen, in Klarbildformat verarbeitet und gespeichert werden.

Zum Anonymisieren der personenbezogenen optischen Signale 40 kann vorteilhaft eine Detektion wenigstens einer Person mit einer anschließenden Anonymisierung der detektierten Person stattfinden. Dabei kann insbesondere die Detektion der Person über eine Verarbeitung der personenbezogenen optischen Signale 40 mittels eines Kalman-Filters erfolgen.

Eine detektierte Person kann in dem ersten Signalstrom 40 mit den personenbezogenen optischen Signalen nach wenigstens einem personenbezogenen Merkmal klassifiziert werden, wobei das personenbezogene Merkmal insbesondere Alter und/oder Geschlecht umfassen kann. Damit kann eine anonymisierte detektierte Person in dem anonymisierten Ausgangssignalstrom 42 mit Informationen zu dem personenbezogenen Merkmal versehen werden, insbesondere mit Informationen zu Alter und/oder Geschlecht.

Figur 4 zeigt ein Ablaufschema für ein Verfahren zum Erfassen und Analysieren von personenbezogenen akustischen Signalen nach einem weiteren Ausführungsbeispiel der Erfindung. Dabei werden im Schritt S200 akustische Signale, insbesondere Audiosignale, mit wenigstens einer zweiten Erfassungseinheit 20 erfasst. In Schritt S202 werden die akustischen Signale mit einer vierten Verarbeitungseinheit 24 analysiert in ein anonymisiertes Analyseergebnis 45 umgesetzt. Akustische Signale können zweckmäßigerweise zusätzlich zu den optischen Signalen zu Überwachungszwecken hinzugezogen werden. Analyseergebnisse 44, 45 der zweiten und der vierten Verarbeitungseinheit 18, 24 können so in der dritten Verarbeitungseinheit 22 nach wenigstens einem Kriterium bewertet werden und abhängig vom wenigstens einen Kriterium das Triggersignal 46 erzeugt werden.

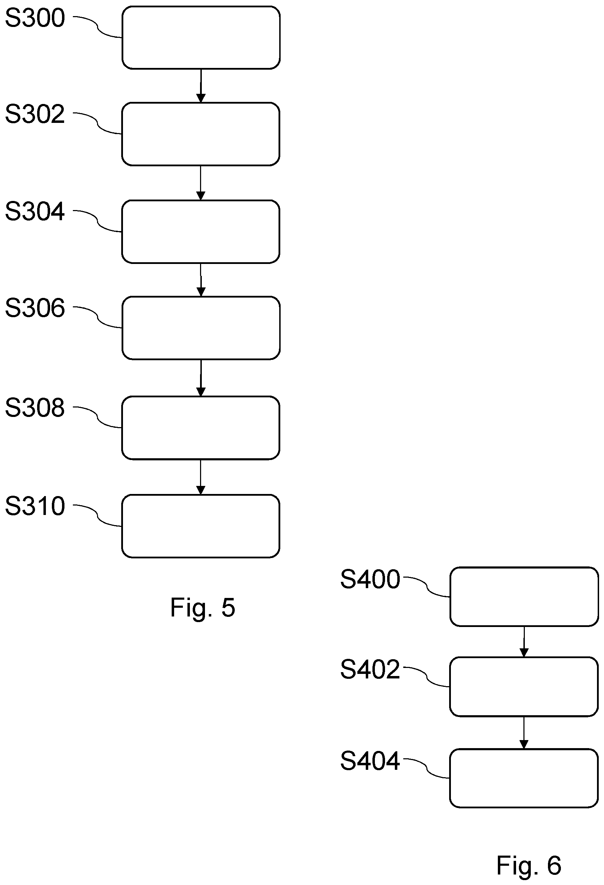

In Figur 5 ist ein Ablaufschema für ein Verfahren zum Verfolgen einer Person in einem ersten Signalstrom 40 mit den personenbezogenen optischen Signalen nach einem Ausführungsbeispiel der Erfindung dargestellt.

In Schritt S300 wird die Person in einem Video-Frame des ersten Signalstroms 40 detektiert. Anschließend wird in Schritt S302 ein Farb-Histogramm für die Person ermittelt, gefolgt vom Fügen des Farb-Histogramms und der Koordinaten der Person zu einem Informationsvektor in Schritt S304. Danach wird in Schritt S306 in einem folgenden Video-Frame für jede detektierte Person nach einem nächsten Nachbar der Person gesucht und daraus ein weiterer Informationsvektor bestimmt. In Schritt S308 wird ein Abstandswert der beiden Informationsvektoren bestimmt. Der nächste Nachbar wird sodann in Schritt S310 als die ursprünglich detektierte Person erkannt, wenn der Abstandswert unter einer vorgegebenen Grenze liegt.

Aus Bewegungsdaten der detektierten Person kann dabei zweckmäßigerweise wenigstens eine Bewegungskarte und/oder eine Wärmekarte erstellt werden.

Figur 6 zeigt ein Ablaufschema für ein Verfahren zum Erkennen einer Person in dem ersten Signalstrom 40 mit den personenbezogenen optischen Signalen nach einem Ausführungsbeispiel der Erfindung.

In Schritt S400 wird ein Trainingsset einer bestimmten Anzahl von Personen vorgegeben, wobei von jeder Person eine weitere Anzahl an Bildern in unterschiedlichen Posen benutzt wird. Danach wird in Schritt S402 ein Klassifizierer, beispielsweise ein neuronales Netz, trainiert, wobei eine Anzahl an Klassen des Klassifizierers der Anzahl der Personen entspricht. Danach wird mit einer Triplet Loss Funktion weitertrainiert (Schritt S404). Das Trainieren mit der Triplet Loss Funktion kann zweckmäßigerweise unter der Randbedingung geschehen, dass der Abstandswert bei zwei gleichen Personen minimiert wird und der Abstandswert bei zwei unterschiedlichen Personen maximiert wird.

Zum Detektieren von Personen in dem ersten Signalstrom 40 mit den personenbezogenen optischen Signalen können so vorteilhaft neuronale Netze oder ähnliche Mustererkennungsverfahren und/oder Schätzverfahren wie beispielsweise Bayes-Netze verwendet werden.

## Patentansprüche

1. Verfahren zum Verarbeiten von personenbezogenen optischen und/oder akustischen Signalen, **gekennzeichnet durch** die Schritte
(i) Erfassen (S100) von optischen Signalen, insbesondere von Bildsignalen und/oder Videosignalen, mit wenigstens einer ersten Erfassungseinheit (10) zur Erfassung optischer Signale;
(ii) Weiterleiten (S102) der optischen Signale in einem ersten Signalstrom (40) an eine erste Verarbeitungseinheit (14);
(iii) Anonymisieren (S104) von personenbezogenen optischen Signalen im ersten Signalstrom (40) in der ersten Verarbeitungseinheit (14);
(iv) Ausgeben (S106) eines anonymisierten Ausgangssignalstroms (42), der die anonymisierten personenbezogenen optischen Signale enthält, an eine erste Datenverarbeitungseinheit (16);
(v) Analysieren (S108) des ersten Signalstroms (40) mit den personenbezogenen optischen Signalen in einer zweiten Verarbeitungseinheit (18) und Ausgeben eines, insbesondere anonymisierten, ersten Analyseergebnisses (44) an eine dritte Verarbeitungseinheit (22);
(vi) Bewerten (S110) des ersten Analyseergebnisses (44) anhand von wenigstens einem Kriterium in der dritten Verarbeitungseinheit (22) und Erzeugen eines Triggersignals (46) abhängig vom wenigsten einen Kriterium und Ausgeben des Triggersignals (46) an die erste Datenverarbeitungseinheit (16);
(vii) Weiterleiten (S112) des anonymisierten Ausgangssignalstroms (42) abhängig vom Triggersignal (46) von der ersten Datenverarbeitungseinheit (16) an einen Leitstand (30).

2. Verfahren nach Anspruch 1, **gekennzeichnet durch**
(viii) Erfassen (S200) von akustischen Signalen, insbesondere Audiosignalen, mit wenigstens einer zweiten Erfassungseinheit (20) und
(ix) Analysieren (S202) der akustischen Signale mit einer vierten Verarbeitungseinheit (24) und Umsetzen der analysierten akustischen Signale in ein anonymisiertes Analyseergebnis (45).

3. Verfahren nach Anspruch 1 oder 2, **gekennzeichnet durch** Verarbeiten und/oder Speichern des ersten Signalstroms (40), insbesondere von personenbezogenen optischen Signalen in Klarbildformat, in einer zweiten Datenverarbeitungseinheit (17).

4. Verfahren nach einem der vorhergehenden Ansprüche, **dadurch gekennzeichnet, dass** zum Anonymisieren der personenbezogenen optischen Signale (40) eine Detektion wenigstens einer Person mit einer anschließenden Anonymisierung der detektierten Person stattfindet, insbesondere wobei die Detektion der Person über eine Verarbeitung der personenbezogenen optischen Signale (40) mittels eines Kalman-Filters erfolgt.

5. Verfahren nach einem der vorhergehenden Ansprüche, **dadurch gekennzeichnet, dass** das Verfolgen einer Person in dem ersten Signalstrom (40) mit den personenbezogenen optischen Signalen folgende Schritte umfasst:
(i) Detektieren (S300) der Person in einem Video-Frame;
(ii) Ermitteln (S302) eines Farb-Histogramms für die Person;
(iii) Fügen (S304) des Farb-Histogramms und Koordinaten der Person zu einem Informationsvektor;
(iv) Suchen (S306) in einem folgenden Video-Frame für jede detektierte Person nach einem nächsten Nachbar der Person und daraus Bestimmen eines weiteren Informationsvektors;
(v) Bestimmen (S308) eines Abstandswertes der beiden Informationsvektoren;
(vi) Erkennen (S310) des nächsten Nachbarn als die ursprünglich detektierte Person, wenn der Abstandswert unter einer vorgegebenen Grenze liegt.

6. Verfahren nach Anspruch 5, **dadurch gekennzeichnet, dass** aus Bewegungsdaten der detektierten Person wenigstens eine Bewegungskarte und/oder eine Wärmekarte erstellt wird.

7. Verfahren nach einem der vorhergehenden Ansprüche, **dadurch gekennzeichnet, dass** das Erkennen einer Person in dem ersten Signalstrom (40) mit den personenbezogenen optischen Signalen folgende Schritte umfasst:
(i) Vorgeben (S400) eines Trainingssets einer bestimmten Anzahl von Personen, wobei von jeder Person eine weitere Anzahl an Bildern in unterschiedlichen Posen benutzt wird;
(ii) Trainieren (S402) eines Klassifizierers, wobei eine Anzahl an Klassen des Klassifizierers der Anzahl der Personen entspricht;
(iii) Trainieren (S404) mit einer Triplet Loss Funktion.

8. Verfahren nach Anspruch 7, **dadurch gekennzeichnet, dass** das Trainieren mit der Triplet Loss Funktion folgende Schritte umfasst:
(iv) Minimieren des Abstandswerts bei zwei gleichen Personen;
(v) Maximieren des Abstandswerts bei zwei unterschiedlichen Personen.

9. Verfahren nach einem der vorhergehenden Ansprüche, **dadurch gekennzeichnet, dass** zum Detektieren von Personen in dem ersten Signalstrom (40) mit den personenbezogenen optischen Signalen neuronale Netze verwendet werden.

10. Verfahren nach einem der vorhergehenden Ansprüche, **dadurch gekennzeichnet, dass** eine detektierte Person in dem ersten Signalstrom (40) mit den personenbezogenen optischen Signalen nach wenigstens einem personenbezogenen Merkmal klassifiziert wird, insbesondere wobei das personenbezogene Merkmal Alter und/oder Geschlecht umfasst.

11. Verfahren nach Anspruch 10, **dadurch gekennzeichnet, dass** eine anonymisierte detektierte Person in dem anonymisierten Ausgangssignalstrom (42) mit Informationen zu dem personenbezogenen Merkmal versehen wird, insbesondere mit Informationen zu Alter und/oder Geschlecht versehen wird.

12. Verfahren nach einem der vorhergehenden Ansprüche, **dadurch gekennzeichnet, dass** Analyseergebnisse (44, 45) der zweiten und/oder vierten Verarbeitungseinheit (18, 24) in der dritten Verarbeitungseinheit (22) nach wenigstens einem Kriterium bewertet werden und abhängig vom wenigstens einen Kriterium das Triggersignal (46) erzeugt wird.

13. System (100) zum Verarbeiten von personenbezogenen optischen und/oder akustischen Signalen, umfassend wenigstens
- Eine erste Erfassungseinheit (10) für optische Signale, insbesondere Bildsignale und/oder Videosignale, zur Erzeugung eines ersten Signalstroms (40) mit personenbezogenen optischen Signalen;
- eine erste Verarbeitungseinheit (14) zum Anonymisieren von personenbezogenen optischen Signalen im ersten Signalstrom (40) und zum Ausgeben eines anonymisierten Ausgangssignalstroms (42);
- eine zweite Verarbeitungseinheit (18) zum Analysieren von personenbezogenen optischen Signalen im ersten Signalstrom (40) und Ausgeben eines ersten Analyseergebnisses (44);
- eine dritte Verarbeitungseinheit (22) zum Bewerten des ersten Analyseergebnisses (44) und zum Ausgeben eines Triggersignals (46) abhängig von wenigstens einem Kriterium;
- eine erste Datenverarbeitungseinheit (16) zum Weiterleiten des anonymisierten Ausgangssignalstroms (42) und/oder des Triggersignals (46) abhängig vom Kriterium;
- einen Leitstand (30) zum Empfangen zumindest des anonymisierten Ausgangssignalstroms (42) und/oder des Triggersignals (46) abhängig von dem Triggersignal (46),
wobei das System (100) zum Ausführen eines Verfahrens nach einem der vorhergehenden Ansprüche vorgesehen ist.

14. System nach Anspruch 13, weiter umfassend
- eine zweite Erfassungseinheit (20) für akustische Signale, insbesondere Audiosignale;
- eine vierte Verarbeitungseinheit (24) zum Analysieren der akustischen Signale und zum Ausgeben eines zweiten Analyseergebnisses (45) an die dritte Verarbeitungseinheit (22).

15. System nach Anspruch 14, wobei die zweite Erfassungseinheit (20) und die vierte Verarbeitungseinheit (24) integriert ausgebildet sind.

16. System nach einem der Ansprüche 13 bis 15, wobei die dritte Verarbeitungseinheit (22) zum gemeinsamen Bewerten des ersten und zweiten Analyseergebnisses (44, 45) nach dem wenigstens einen Kriterium vorgesehen ist.

17. System nach einem der Ansprüche 13 bis 16, wobei eine zweite Datenverarbeitungseinheit (17) zur Verarbeitung des ersten Signalstroms (40) mit personenbezogenen optischen Signalen im Klarbildformat vorgesehen ist.

18. System nach einem der Ansprüche 13 bis 17, wobei wenigstens eine Schalteinheit (12) zur Integration, insbesondere zum Multiplexen von optischen und/oder akustischen Signalen vorgesehen ist.

## Claims

1. Method for processing person-related optical and/or acoustic signals, **characterised by** the steps
(i) Detecting (S100) optical signals, in particular image signals and/or video signals, with at least a first detection unit (10) for detecting optical signals,
(ii) Transmitting (S102) the optical signals in a first signal stream (40) to a first processing unit (14),
(iii) Anonymising (S104) person-related optical signals in the first signal stream (40) in the first processing unit (14),
(iv) Outputting (S106) an anonymised output signal stream (42), which contains the anonymised person-related optical signals, to a first data processing unit (16),
(v) Analysing (S108) the first signal stream (40) with the person-related optical signals in a second processing unit (18) and outputting a, in particular anonymised, first analysis result (44) to a third processing unit (22),
(vi) Evaluating (S110) the first analysis result (44) on the basis of at least one criterion in the third processing unit (22) and generating a trigger signal (46) on the basis of at least one criterion and outputting the trigger signal (46) to the first data processing unit (16),
(vii) Transmitting (S112) the anonymised output signal stream (42) on the basis of the trigger signal (46) from the first data processing unit (16) to a control station (30).

2. Method according to claim 1, **characterised by**
(viii) Detecting (S200) acoustic signals, in particular audio signals, with at least a second detection unit (20) and
(ix) Analysing (S202) the acoustic signals with a fourth processing unit (24) and converting the analysed acoustic signals into an anonymised analysis result (45).

3. Method according to claim 1 or 2, **characterised by** processing and/or storing the first signal stream (40), in particular of person-related optical signals in clear image format, in a second data processing unit (17).

4. Method according to any of the preceding claims, **characterised in that**, in order to anonymise the person-related optical signals (40), detection of at least one person takes place with subsequent anonymisation of the detected person, in particular wherein detection of the person takes place by processing the person-related optical signals (40) by means of a Kalman filter.

5. Method according to any of the preceding claims, **characterised in that** tracking a person in the first signal stream (40) with the person-related optical signals comprises the following steps:
(i) Detecting (S300) the person in a video frame,
(ii) Determining (S302) a colour histogram for the person,
(iii) Combining (S304) the person's colour histogram and coordinates to create an information vector,
(iv) Searching (S306) in a subsequent video frame for each detected person for a nearest neighbour of the person and thus determining a further information vector,
(v) Determining (S308) a distance value for the two information vectors,
(vi) Identifying (S310) the nearest neighbour as the person originally detected if the distance value is below a predetermined threshold.

6. Method according to claim 5, **characterised in that** at least one movement map and/or a heat map is created from movement data for the detected person.

7. Method according to any of the preceding claims, **characterised in that** identifying a person in the first signal stream (40) with the person-related optical signals comprises the following steps:
(i) Specifying (S400) a training set of a certain number of people, wherein a further number of images of each person in different poses is used,
(ii) Training (S402) a classifier, wherein a number of classes of the classifier corresponds to the number of people,
(iii) Training (S404) with a triplet loss function.

8. Method according to claim 7, **characterised in that** training with the triplet loss function comprises the following steps:
(iv) Minimising the distance value for two identical people,
(v) Maximising the distance value for two different people.

9. Method according to any of the preceding claims, **characterised in that** neural networks are used to detect people in the first signal stream (40) with the person-related optical signals.

10. Method according to any of the preceding claims, **characterised in that** a person detected in the first signal stream (40) with the person-related optical signals is classified on the basis of at least one personal characteristic, in particular wherein the personal characteristic comprises age and/or gender.

11. Method according to claim 10, **characterised in that** an anonymised detected person is provided in the anonymised output signal stream (42) with information on the personal characteristic, in particular with information on age and/or gender.

12. Method according to any of the preceding claims, **characterised in that** analysis results (44, 45) for the second and/or fourth processing unit (18, 24) are evaluated in the third processing unit (22) on the basis of at least one criterion and the trigger signal (46) is generated on the basis of at least one criterion.

13. System (100) for processing person-related optical and/or acoustic signals, comprising at least
- A first detection unit (10) for optical signals, in particular image signals and/or video signals, for generating a first signal stream (40) with person-related optical signals,
- a first processing unit (14) for anonymising person-related optical signals in the first signal stream (40) and for outputting an anonymised output signal stream (42),
- a second processing unit (18) for analysing person-related optical signals in the first signal stream (40) and outputting a first analysis result (44),
- a third processing unit (22) for evaluating the first analysis result (44) and for outputting a trigger signal (46) on the basis of at least one criterion,
- a first data processing unit (16) for transmitting the anonymised output signal stream (42) and/or the trigger signal (46) on the basis of the criterion,
- a control station (30) for receiving at least the anonymised output signal stream (42) and/or the trigger signal (46) on the basis of the trigger signal (46),
wherein the system (100) is provided for executing a method according to any of the preceding claims.

14. System according to claim 13, further comprising
- a second detection unit (20) for acoustic signals, in particular audio signals,
- a fourth processing unit (24) for analysing the acoustic signals and for outputting a second analysis result (45) to the third processing unit (22).

15. System according to claim 14, wherein the second detection unit (20) and the fourth processing unit (24) are integrated.

16. System according to any of claims 13 to 15, wherein the third processing unit (22) is provided for jointly evaluating the first and second analysis result (44, 45) on the basis of the at least one criterion.

17. System according to any of claims 13 to 16, wherein a second data processing unit (17) is provided for processing the first signal stream (40) with person-related optical signals in clear image format.

18. System according to any of claims 13 to 17, wherein at least one switching unit (12) is provided for integration, in particular for multiplexing optical and/or acoustic signals.

## Revendications

1. Procédé de traitement de signaux optiques et/ou acoustiques personnels, **caractérisé par** les étapes consistant à
(i) détecter (S100) des signaux optiques, en particulier de signaux d'image et/ou des signaux vidéo, avec au moins une première unité de détection (10) pour la détection de signaux optiques ;
(ii) transmettre (S102) les signaux optiques dans un premier courant de signal (40) à une première unité de traitement (14) ;
(iii) anonymiser (S104) des signaux optiques personnels dans le premier courant de signal (40) dans la première unité de traitement (14) ;
(iv) émettre (S106) un courant de signal de sortie anonymisé (42) contenant les signaux optiques personnels anonymisés à une première unité de traitement de données(16) ;
(v) analyser (S108) le premier courant de signal (40) avec les signaux optiques personnels dans une deuxième unité de traitement (18) et émettre un premier résultat d'analyse (44), en particulier anonymisé, à une troisième unité de traitement (22) ;
(vi) évaluer (S110) le premier résultat d'analyse (44) sur la base d'au moins un critère dans la troisième unité de traitement (22) et générer un signal de déclenchement (46) en fonction d'au moins un critère et émettre le signal de déclenchement (46) à la première unité de traitement de données (16) ;
(vii) transmettre (S112) le courant de signal de sortie anonymisé (42) de la première unité de traitement de données (16) à un poste de commande (30) en fonction du signal de déclenchement (46).

2. Procédé selon la revendication 1, **caractérisé par** les étapes consistant à :
(viii) détecter (S200) des signaux acoustiques, en particulier de signaux audio, avec au moins une deuxième unité d'acquisition (20) et
(ix) analyser (S202) les signaux acoustiques avec une quatrième unité de traitement (24) et convertir les signaux acoustiques analysés en un résultat d'analyse anonymisé (45).

3. Procédé selon la revendication 1 ou 2, **caractérisé par** le traitement et/ou le stockage du premier courant de signal (40), en particulier de signaux optiques personnels en format d'image claire, dans une deuxième unité de traitement de données (17).

4. Procédé selon l'une quelconque des revendications précédentes, **caractérisé en ce que** pour anonymiser les signaux optiques personnels (40), une détection d'au moins une personne avec une anonymisation ultérieure de la personne détectée a lieu, en particulier dans lequel la détection de la personne a lieu en traitant les signaux optiques personnels (40) au moyen d'un filtre de Kalman.

5. Procédé selon l'une quelconque des revendications précédentes, **caractérisé en ce que** le suivi d'une personne dans le premier courant de signal (40) avec les signaux optiques personnels comprend les étapes suivantes consistant à :
(i) détecter (S300) la personne dans une trame vidéo ;
(ii) déterminer (S302) un histogramme de couleur pour la personne ;
(iii) joindre (S304) l'histogramme de couleur et les coordonnées de la personne à un vecteur d'information ;
(iv) rechercher (S306) dans une trame vidéo ultérieure pour chaque personne détectée d'un voisin le plus proche de la personne et en déterminer un vecteur d'information supplémentaire ;
(v) déterminer (S308) une valeur de distance entre les deux vecteurs d'information ;
(vi) reconnaître (S310) le voisin le plus proche comme étant la personne détectée à l'origine lorsque la valeur de la distance est inférieure à une limite prédéterminée.

6. Procédé selon la revendication 5, **caractérisé en ce qu'**au moins une carte de mouvement et/ou une carte de chaleur est générée à partir des données de mouvement de la personne détectée.

7. Procédé selon l'une quelconque des revendications précédentes, **caractérisé en ce que** la reconnaissance d'une personne dans le premier courant de signal (40) avec les signaux optiques personnels comprend les étapes suivantes consistant à :
(i) spécifier (S400) un groupe d'apprentissage d'un certain nombre de personnes, dans lequel un nombre supplémentaire d'images de chaque personne dans différentes poses est utilisé ;
(ii) faire apprendre (S402) un classificateur, dans laquelle un nombre de classes du classificateur correspond au nombre de personnes ;
(iii) faire apprendre (S404) avec une fonction Triplet Loss.

8. Procédé selon la revendication 7, **caractérisée en ce que** l'apprentissage avec la fonction Triplet Loss comprend les étapes suivantes consistant à :
(iv) minimiser la valeur de distance pour deux personnes égales ;
(v) maximiser la valeur de distance pour deux personnes différentes ;

9. Procédé selon l'une quelconque des revendications précédentes, **caractérisé en ce que** des réseaux neuronaux sont utilisés pour détecter des personnes dans le premier courant de signal (40) avec les signaux optiques personnels.

10. Procédé selon l'une quelconque des revendications précédentes, **caractérisé en ce qu'**une personne détectée est classée dans le premier courant de signal (40) avec les signaux optiques personnels selon au moins une caractéristique personnelle, en particulier dans laquelle la caractéristique personnelle comprend l'âge et/ou le sexe.

11. Procédé selon la revendication 10, **caractérisé en ce qu'**une personne détectée anonymisée reçoit dans le courant de signal de sortie anonymisé (42) des informations sur la caractéristique personnelle, en particulier des informations sur l'âge et/ou le sexe.

12. Procédé selon l'une quelconque des revendications précédentes, **caractérisé en ce que** les résultats d'analyse (44, 45) des deuxième et/ou quatrième unités de traitement (18, 24) sont évalués dans la troisième unité de traitement (22) selon au moins un critère et, en fonction de l'au moins un critère, le signal de déclenchement (46) est généré.

13. Système (100) pour le traitement de signaux optiques et/ou acoustiques personnels, comprenant au moins
- une première unité de détection (10) pour des signaux optiques, en particulier des signaux d'image et/ou des signaux vidéo, pour générer un premier courant de signal (40) avec des signaux optiques personnels ;
- une première unité de traitement (14) pour anonymiser des signaux optiques personnels dans le premier courant de signal (40) et pour émettre un courant de signal de sortie anonymisé (42) ;
- une deuxième unité de traitement (18) pour analyser des signaux optiques personnels dans le premier courant de signal (40) et émettre un premier résultat d'analyse (44) ;
- une troisième unité de traitement (22) pour évaluer le premier résultat d'analyse (44) et pour émettre un signal de déclenchement (46) en fonction d'au moins un critère ;
- une première unité de traitement de données (16) pour transmettre le courant de signal de sortie anonymisé (42) et/ou le signal de déclenchement (46) en fonction du critère ;
- un poste de commande (30) pour recevoir au moins le courant de signal de sortie anonymisé (42) et/ou le signal de déclenchement (46) en fonction du signal de déclenchement (46),
dans lequel le système (100) est prévu pour exécuter un procédé selon l'une quelconque des revendications précédentes.

14. Système selon la revendication 13, comprenant en outre
- une deuxième unité de détection (20) pour signaux acoustiques, en particulier des signaux audio ;
- une quatrième unité de traitement (24) pour analyser les signaux acoustiques et pour émettre un deuxième résultat d'analyse (45) à la troisième unité de traitement (22).

15. Système selon la revendication 14, dans lequel la deuxième unité de détection (20) et la quatrième unité de traitement (24) sont intégrées.

16. Système selon l'une quelconque des revendications 13 à 15, dans lequel la troisième unité de traitement (22) est prévue pour évaluer conjointement le résultat du premier et deuxième résultat d'analyse (44, 45) en fonction de l'au moins un critère.

17. Système selon l'une quelconque des revendications 13 à 16, dans lequel une deuxième unité de traitement de données (17) est prévue pour traiter le premier courant de signal (40) avec des signaux optiques personnels en format d'image claire.

18. Système selon quelconque l'une des revendications 13 à 17, dans lequel au moins une unité de commutation (12) est prévue pour l'intégration, en particulier pour le multiplexage de signaux optiques et/ou acoustiques.
